# EUROPÄISCHE PATENTSCHRIFT

(11) **EP 0 960 684 B1**
(45) Veröffentlichungstag und Bekanntmachung des Hinweises auf die Patenterteilung: **25.02.2004**
(21) Anmeldenummer: 99108328.8
(22) Anmeldetag: 28.04.1999
(51) Int. Cl.: B23K 37/04

(54) **Verfahren und Vorrichtung zum Verbinden zweier Bauteile mittels thermischem Fügen**
Thermal connecting method and device used for joining two parts
Méthode et outil pour joindre thermiquement deux pièces

(30) Priorität: 04.05.1998 DE 19819757
(43) Veröffentlichungstag der Anmeldung: 01.12.1999
(73) Patentinhaber: AUDI AG, 85045 Ingolstadt (DE)
(72) Erfinder: Schmidt, Johann, 85135 Titting (DE); Stelz, Richard, 85053 Ingolstadt (DE); Koglin, Klaus, Dr., 74172 Neckarsulm (DE); Brück, Katarina, 59872 Meschede (DE); Redlich, Christian, 85114 Buxheim (DE)

(56) Entgegenhaltungen:
- FR-A- 2 662 231
- FR-A- 2 669 253
- US-A- 4 294 394

## Beschreibung

Die Erfindung bezieht sich auf ein Verfahren zum Verbinden zweier Bauteile mittels thermischem Fügen, insbesondere Schweißen, wobei die Bauteile an der Verbindungsstelle über ein krafterzeugendes Mittel eine Anpreßkraft aufeinander ausüben. Des weiteren bezieht sich die Erfindung auf eine Vorrichtung zur Durchführung dieses Verfahrens.

Eine gattungsgemäße Vorgehensweise ist durch die DE 34 42 681 C2 bekannt geworden. Darin wird eine Vorrichtung zum Verbinden von zwei Blechtafeln mittels Stumpfschweißung mit einer gekrümmten Führung und einer an der Stoßstelle der beiden Blechtafeln senkrecht zur Führung angeordneten Schweißeinrichtung beschrieben, wobei an den der Schweißeinrichtung abgewandten Seiten der Blechtafeln durch Rollen gebildete Druckstücke einwirken, welche mittels Federkraft die Blechtafeln an ihren Berührungsflächen andrücken. Dabei wird das Ziel verfolgt, die Vorrichtung so auszubilden, daß auch bei größeren Maßabweichungen der Blechtafeln Störungen beim Schweißvorgang vermieden werden.

Die im Stand der Technik bekannte Vorrichtung ermöglicht es, daß beim Verbinden von zwei Blechtafeln während und nach dem Fügen eine thermische Ausdehnung nicht behindert wird und somit nicht reproduzierbare Spannungszustände vermieden werden. Bei der Verbindung von Bauteilen, die z. B. zu einer Rahmenstruktur ergänzt werden, ist die bekannte Vorrichtung und die mit ihr mögliche Vorgehensweise nicht anwendbar.

Die Erfindung betrifft allgemein Rahmenstrukturen, insbesondere für Kraftfahrzeuge, bestehend aus Profilen und/oder Gußteilen, welche mittels thermischem Fügen miteinander verbunden werden. Unter thermischem Fügen sollen hier insbesondere alle bekannten Schweißverfahren verstanden werden.
Durch diese Verbindungstechnik wird in die Rahmenstruktur partiell Wärme eingebracht. Diese Wärmeeinbringung hat eine Längen- und/oder Formänderung zur Folge, welche die Struktur zeitweise oder andauernd elastisch oder plastisch verformt. Bei der herkömmlichen starren Verbindungstechnik für Profile und/oder Gußteile wird die thermisch bedingte Längen- und Formänderung durch feste Spannstellen und/oder die angrenzenden Bauteile behindert. Es stellt sich in der Rahmenstruktur ein nicht reproduzierbarer Spannungszustand ein.

Durch das Fixieren der zu verbindenden Bauteile in starren Vorrichtungen nehmen die Bauteile beim Einlegen eine vorgegebene Position ein und behalten diese über den ganzen Fügeprozeß bis zur Entnahme aus der Vorrichtung bei. Ausschließlich die eingestellte Fixierung bestimmt die Lage der Bauteile und nimmt keinen Einfluß auf die Toleranzen an der Fügestelle. Da Wärmeausdehnungen nicht zugelassen werden, ergibt sich ein Stauchungseffekt mit der Einleitung von Kräften in die Fügevorrichtung. Auch ein Schrumpfen der Bauteile beim Erkalten nach dem thermischen Fügen wird nicht zugelassen. Die Folge sind Bauteilspannungen und Deformationen. Dies geht mit der zusätzlichen Einleitung von Kräften in die Fügevorrichtung einher. Da alle auftretenden Kräfte, die durch diese thermischen Spannungen entstehen, aufgenommen werden müssen, ergeben sich schwere bzw. teure Vorrichtungskonstruktionen.

Der Erfindung liegt die Aufgabe zugrunde, eine Verfahrensweise zum thermischen Fügen von Bauteilen, insbesondere zur Herstellung von Rahmenstrukturen, bereit zu stellen, mit deren Hilfe nicht reproduzierbare Spannungszustände aufgrund der partiell eingebrachten Wärme vermieden werden können.

Die erfindungsgemäße Lösung ist im Patentanspruch 1 zu sehen. Eine besonders geeignete Vorrichtung zur Durchführung des Verfahrens ist mit Patentanspruch 3 beansprucht. Die jeweiligen Unteransprüche bilden die Erfindung in vorteilhafter Weise weiter und stellen geeignete Ausgestaltungen dar. Ein Ausführungsbeispiel ist nachstehend näher erläutert und in der zugehörigen Zeichnung weiter verdeutlicht. In dieser zeigt
- **Fig. 1**: eine schematische Darstellung einer Vorrichtung zur Durchführung des Verfahrens und
- **Fig. 2a - 2d**: in schematischer Darstellung die einzelnen Abfolgen beim Fixieren und Fügen von miteinander zu verbindenden Bauteilen.

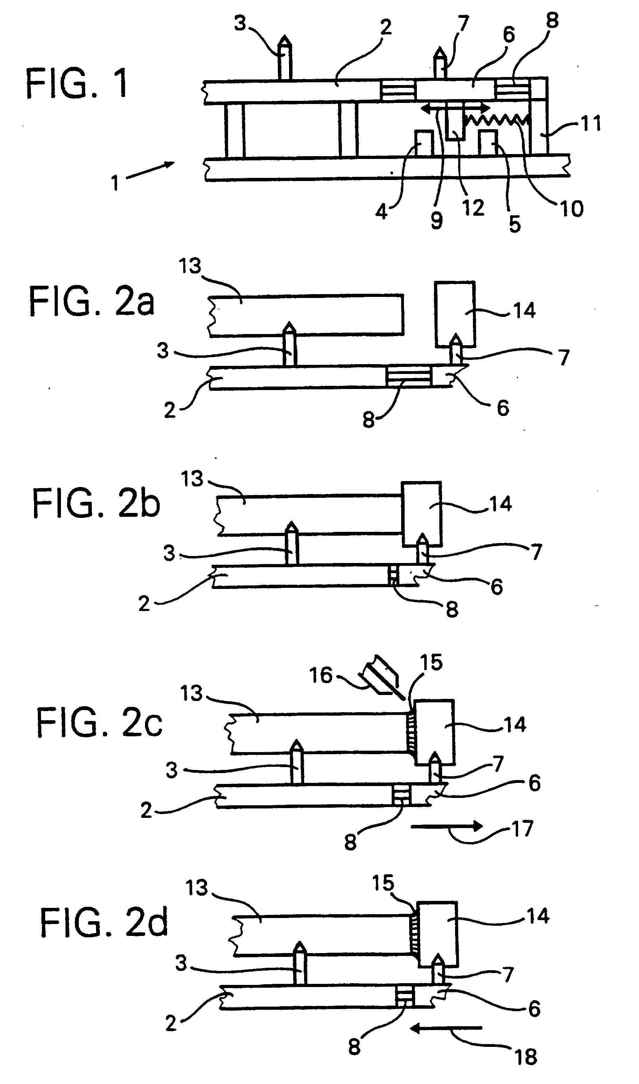

Fig. 1 zeigt einen Abschnitt einer zur Durchführung des erfindungsgemäßen Verfahrens besonders geeigneten Vorrichtung 1, bestehend aus einem Grundrahmen 2 mit einer obenseitigen Bauteilaufnahme 3 und mit diversen Anschlägen 4, 5 für einen als Schlitten ausgebildeten Bauteilträger 6, der eine weitere Bauteilaufnahme 7 aufweist. Der Bauteilträger 6 ist auf einer Schlittenführung 8 (z.B. Schwalbenschwanzführung) horizontal beweglich (Doppelpfeil 9) gelagert, wobei der Bauteilträger 6 des weiteren von einer Druckfeder 10 beaufschlagt ist, die ihn in Richtung der Bauteilaufnahme 3 zu bewegen sucht. Die Druckfeder 10 stützt sich dabei an einem Steg 11 des Grundrahmens 2 ab und legt andemends an einem vertikal nach unten gerichteten Zapfen 12 des Bauteilträgers 6 an, der darüber hinaus zwischen die beiden Anschläge 4, 5 reicht.

Die Fig. 2a - 2d zeigen den Fügevorgang zum Verbinden zweier Bauteile 13, 14 (z.B. Profile) wobei hervorzuheben ist, daß das erfindungsgemäße Verbindungsverfahren sich insbesondere für Aluminiumwerkstoffe eignet.

Die Vorgehensweise ist dabei folgendermaßen: zunächst wird das erste Bauteil 13 in die starr mit dem Grundrahmen 2 verbundene Bauteilaufnahme 3 eingelegt und verspannt. Die Anzahl der insgesamt vorhanden Bauteilaufnahmen 3,7 richtet sich nach den durch die Bauteilabmaße usw. sich ergebenden Erfordernissen. In gleicher Weise wird das zweite Bauteil 14 in die Bauteilaufnahme 7 eingelegt und dort verspannt. Dabei befindet sich die Vorrichtung 1 noch in "offenem Zustand" (vgl. Fig. 2a), der Bauteilträger 6 wird entgegen der Federkraft der Druckfeder 10 über geeignete Mittel einer hier nicht gezeigten Verriegelung in einer solchen Position gehalten, daß die beiden Bauteile 13, 14 noch einen relativ großen Abstand voneinander haben, sich also noch nicht berühren und damit auch nicht in der Fügeposition sind. Dies hat den Vorteil, daß es bei der Einlegearbeit zu keinen Verspannungen kommen kann.

Das zweite Bauteil 14 wird dann nach lösender Verriegelung durch entsprechende Horizontalbewegung des Bauteilträgers 6 in seine Fügeposition (z.B. bei T-Stoßverbindung auf Spalt = 0) gebracht (vergl. Fig. 2b), so daß letztendlich die beiden Bauteile 13, 14 eine durch die Druckfeder 10 bestimmte Kraft aufeinander ausüben.

Die beim Herstellen der Fügeverbindung 15 mittels geeigneter Schweißvorrichtung 16 eingebrachte Wärmeenergie und die damit einhergehende Ausdehnung der Bauteile 13, 14 bewirkt eine mehr oder weniger geringfügige Horizontalbewegung (Pfeil17) des Bauteilträgers 6 (Fig. 2c). Die mit dem späteren Erkalten einhergehende Schrumpfung der Bauteile 13, 14 bewirkt eine entgegengerichtete (Pfeil 18) Horizontalbewegung des Bauteilträgers 6 (vergl. Fig. 2d).

Da die Bauteile 13, 14 in der Vorrichtung 1 während des Schweißens nicht miteinander verspannt werden, stellt sich ein reproduzierbarer Schweißverzug ein, welcher z.B. durch das Verwenden von Bauteilen mit definierter Überlänge voll aufgefangen werden kann. Die beiden Bauteile 13, 14 bleiben trotz Dehnung und Schrumpfung immer in Anlage zueinander, so daß stets ideale Schweißspaltverhältnisse gegeben sind. Dadurch entsteht weder ein Stauchungseffekt noch sind Bauteilspannungen und Deformationen die Folge.
In einer Weiterbildung der Erfindung wäre denkbar, die Federkraft einstellbar zu gestalten. Die Ausdehnungs- bzw. Schrumpfungswege können dadurch begrenzt werden, daß die Horizontalbeweglichkeit des Bauteilträgers 6 über den Zapfen 12 bzw. über die ihm zugeordneten Anschläge 4, 5 beschränkt wird.

## Patentansprüche

1. Verfahren zum Verbinden zweier Bauteile mittels thermischem Fügen, insbesondere Schweißen, wobei die Bauteile an der Verbindungsstelle über ein krafterzeugendes Mittel eine Anpreßkraft aufeinander ausüben, **gekennzeichnet durch** folgende Verfahrensschritte:
Einlegen und Fixieren des ersten Bauteiles (13) in eine mit einem Grundrahmen (2) starr verbundene erste Bauteilaufnahme (3),
Einlegen und Fixieren des zweiten Bauteiles (14) in eine gegenüber dem Grundrahmen (2) mindestens einen Bewegungsfreiheitsgrad aufweisende zweite Bauteilaufnahme (7),
Bewegen der zweiten Bauteilaufnahme (7) und damit des zweiten Bauteiles (14), bis letzteres in seine Fügeposition gelangt und
Herstellen der Fügeverbindung (15), wobei das krafterzeugende Mittel (10) in Richtung (Doppelpfeil 9) des Bewegungsfreiheitsgrades der zweiten Bauteilaufnahme (7) während dem Herstellen der Fügeverbindung frei wirken kann.

2. Verfahren nach Anspruch 1, **dadurch gekennzeichnet, daß** die Anpreßkraft des krafterzeugenden Mittels (10) veränderbar und die Bewegung der zweiten Bauteilaufnahme (7) entlang des mindestens einen Bewegungsfreiheitsgrades während und nach dem Herstellen der Fügeverbindung beschränkt ist.

3. Vorrichtung zur Durchführung des Verfahrens nach Anspruch 1 zum Verbinden zweier Bauteile mittels thermischem Fügen, insbesondere Schweißen, wobei die Bauteile an der Verbindungsstelle über ein krafterzeugendes Mittel eine Anpreßkraft aufeinander ausüben, bestehend aus einem Grundrahmen (2) mit einer ersten Bauteilaufnahme (3) und weiter bestehend aus einem als Schlitten ausgebildeten Bauteilträger (6), der eine weitere Bauteilaufnahme (7) aufweist und über eine Schlittenführung (8) gegenüber dem Grundrahmen (2) beweglich gelagert ist, wobei der Bauteilträger (6) von einer Druckfeder (10) beaufschlagt ist, die ihn in Richtung der ersten Bauteilaufnahme (3) zu bewegen sucht.

4. Vorrichtung nach Anspruch 3, **dadurch gekennzeichnet, daß** der Bauteilträger (6) mit einem Zapfen (12) ausgestattet ist, der mit grundrahmenseitigen Anschlägen (4, 5) zusammenwirkt, während die Druckfeder (10) sich einenends am Zapfen (12) und andernends an einem Steg (11) des Grundrahmens (2) abstützt.

## Claims

1. A method for connecting two components by means of thermal joining, in particular welding, the components exerting a compressive force on one another at the joint location by means of force-generating means, **characterised by** the following process steps:
placing and fixing the first component (13) on a first seating (3) rigidly connected to a main frame (2);
placing and fixing the second component (14) on a second seating (7) having at least one degree of freedom of movement with respect to the main frame (2);
moving the second seating (7) and therefore the second component (14) until it reaches its joining position, and
producing the joint (15), the force-generating means (10) being able to act freely in the direction (double arrow 9) of the degree of freedom of movement of the second seating (7) during the production of the joint.

2. A method according to claim 1, **characterised in that** the compressive force of the force-generating means (10) is variable and the movement of the second seating (7) along the at least one degree of freedom of movement during and after the production of the joint is restricted.

3. An apparatus for carrying out of the method according to claim 1 for connecting two components by means of thermal joining, in particular welding, the components exerting a compressive force on one another at the joint location by means of force-generating means, comprising a main frame (2) having a first seating (3) and further comprising a component carrier (6) in the form of a carriage which has a second seating (7) and is mounted movably with respect to the main frame (2) by means of a carriage guide (8), the component carrier (6) being loaded by a compression spring (10) which seeks to move said component carrier (6) in the direction of the first seating (3).

4. An apparatus according to claim 3, **characterised in that** the component carrier (6) is fitted with a peg (12) which cooperates with stops (4, 5) mounted on the main frame (2), while the compression spring (10) bears with one end against the peg (12) and with the other end against a member (11) of the main frame (2).

## Revendications

1. Procédé pour joindre deux composants par jointoiement thermique, en particulier par soudage, les composants exerçant au point de liaison, l'un sur l'autre, une force de pressage, par l'intermédiaire d'un moyen générateur de force, **caractérisé par** les étapes de procédé suivantes :
insertion et fixation du premier composant (13) dans un premier logement à composant (3), relié rigidement à un cadre de base (2).
insertion et fixation du deuxième composant (14) dans un deuxième logement à composant (7), présentant au moins un degré de liberté de déplacement par rapport au cadre de base (2),
déplacement du deuxième logement à composant (7) et, ainsi, du deuxième composant (14), jusqu'à ce que ce dernier arrive à sa position de jointoiement, et
établissement de la liaison par jointoiement (15), le moyen générateur de force (10) pouvant agir librement dans la direction (flèche double 9) du degré de liberté de déplacement du deuxième logement à composant (7), pendant l'établissement de la liaison par jointoiement.

2. Procédé selon la revendication 1, **caractérisé en ce que** la force de pressage du moyen générateur de force (10) est modifiable, et le déplacement du deuxième logement à composant (7), le long du au moins un degré de liberté de déplacement, pendant et après l'établissement de la liaison par jointoiement, est limité.

3. Dispositif de mise en oeuvre du procédé selon la revendication 1, pour assurer la liaison de deux composants par jointoiement thermique, en particulier par soudage, les composants exerçant l'un sur l'autre une force de pressage au point de liaison, par l'intermédiaire d'un moyen générateur de force, composé d'un cadre de base (2), ayant un premier logement à composant (3), et composé en outre d'un support à composant (6), réalisé sous la forme de chariot, présentant un autre logement à composant (7) et monté de façon mobile par rapport au cadre de base (2), par l'intermédiaire d'un guidage de chariot (8), le support de composant (6) étant sollicité par un ressort de compression (10) qui tente de le déplacer dans la direction du premier logement à composant (3).

4. Dispositif selon la revendication 3, **caractérisé en ce que** le support à composant (6) est muni d'un tourillon (12), coopérant avec des butées (4,5) situées du côté cadre de base, tandis que le ressort de compression (10) prend appui, à une extrémité, sur le tourillon (12) et, à l'autre extrémité, sur une nervure (11 ) du cadre de base (2).
